# FASCICULE DE BREVET EUROPEEN

(11) **EP 0 307 335 B1**
(45) Date de publication et mention de la délivrance du brevet: **07.04.1993**
(21) Numéro de dépôt: 88440074.8
(22) Date de dépôt: 09.09.1988
(51) Int. Cl.: G06F 15/21, A01K 11/00, G07C 9/00

(54) **Procédé et dispositif de gestion d'informations relatives à un label de qualité d'une pièce de viande d'un animal, et dispositif pour la mise en oeuvre de ce procédé**
Verfahren und Anordnung zur Informationsverwaltung von einem zu Schlachtgut gehörenden Datenträger und Vorrichtung zum Durchführen dieses Verfahren
Process and apparatus for the management of information concerning a label of quality of a piece of meat, and device for carrying out this process

(30) Priorité: 11.09.1987 FR 8712731
(43) Date de publication de la demande: 15.03.1989
(73) Titulaire: Hadjadj, Jacques, F-67370 Ittlenheim (FR)
(72) Inventeur: Hadjadj, Jacques, F-67370 Ittlenheim (FR)
(74) Mandataire: Nuss, Pierre

(56) Documents cités:
- EP-A- 0 077 707
- DE-A- 3 313 481
- FR-A- 2 438 420
- GB-A- 2 136 999
- US-A- 4 597 495
- US-A- 4 656 463

## Description

La présente invention concerne un procédé de gestion d'informations relatives à un label de qualité d'une pièce de viande d'un animal, ainsi qu'un dispositif pour la mise en oeuvre de ce procédé.

Actuellement, une pièce de viande en général, et plus particulièrement une pièce issue d'une viande porcine, ovine ou bovine, ne comporte aucune information relative à son historique, c'est-à-dire que, pour le consommateur, elle est totalement anonyme. Ce dernier ignore, en effet, tout des différents paramètres relatifs à la provenance de l'animal, à savoir,par exemple :
- identité (race, âge, sexe) ;
- origine géographique ;
- mode d'élevage et conditions sanitaires ;
- régime alimentaire ;
- date et lieu de l'abattage ;
- type de distribution (carcasse ou grosse découpe) ;
- qualité de la carcasse ;
- conditions de mûrissement en chambre froide...

Or, il faut savoir que pour une pièce de viande, le consommateur considère qu'elle est d'une qualité acceptable uniquement lorsque les critères initiateurs correspondant à chacun des paramètres cités ci-dessus sont favorables et réunis. Ceci est spécifique au produit viande car pratiquement tous les autres produits sont élaborés à partir de matières premières assujetties à des normes précises d'un procédé et d'une gamme de fabrication dûment éprouvés.

Actuellement donc le consommateur ne choisit pas le produit viande mais le subit plutôt, aucune information ne venant à son aide. De plus, si le consommateur reçoit un morceau de viande lui convenant particulièrement et répondant à ses critères de sélection, se pose alors pour lui le problème de la constance ou fidélité de la qualité, c'est-à-dire que rien ne lui permettra de retrouver par la suite une pièce de viande identique. En effet, les principales caractéristiques de la pièce de viande (viande ferme, tendre, onctueuse, fibreuse, légère, etc...), ainsi que les principales propriétés gustatives dépendent chacune de certains des paramètres indiqués ci-dessus.

On connait du document EP-A-0 077 707 un dispositif élémentaire d'identification. Il s'agit d'une étiquette d'identification d'objets et d'un appareillage pour son utilisation. Cette étiquette comprend différentes zones dans lesquelles sont inscrites des informations ainsi que des données relatives à l'objet à identifier. Ce procédé ne permet donc qu'une simple lecture et une simple extraction d'informations identifiées mais ne permet pas la gestion d'informations relatives à un label de qualité d'une pièce de viande d'un animal.

On connait également le document GB-A-2 136 999 qui a pour objet une méthode d'enregistrement de données relatives à la production de lait de vaches laitières. Les informations relatives à la production laitière de chaque vache peuvent être enregistrées tout en identifiant simultanément ladite vache. Il ne s'agit donc là que d'une méthode d'enregistrement d'informations et non de gestion des informations, dont le seul but consiste à contrôler la conformité, en terme de qualité, du lait produit par une vache donnée, à la qualité précédemment reconnue et enregistrée et considérée comme la qualité référence.

Le problème général à résoudre par l'objet de la présente invention est de concevoir un procédé de gestion d'informations relatives à un label de qualité d'une pièce de viande d'un animal, notamment sur son origine, son mode d'élevage et son abattage, en vue de générer une étiquette destinée à accompagner la carcasse de l'animal et portant les composants d'un label.

Ainsi, le consommateur pourra, grâce à ce label, procéder à un choix lui garantissant un certain type de viande répondant à ses goûts et à ses tendances. Par ailleurs, un tel label aura, bien entendu, également des répercussions au niveau des professions environnantes, à savoir notamment au niveau de la sélection de l'élevage, du négoce, de l'abattage, de la distribution, de la production céréalière, de l'alimentation du bétail, de la construction industrielle destinée à l'habitat animal, de la pharmacologie vétérinaire de l'animal, etc...

Le procédé de gestion conforme à l'invention et permettant de générer un tel label est tel que compris dans la revendication 1.

Le système informatique supportant le procédé objet de la présente invention est tel que compris dans la revendication 2.

Les principales informations à gérer, relèvent, comme indiqué précédemment, de l'origine de l'animal, de son mode d'élevage, ainsi que de son abattage.

Les informations correspondant à l'origine de l'animal sont principalement, à titre d'exemple, les suivantes :
- espèce (bovin, ovin, porcin...) ;
- race (pour une viande bovine, par exemple, charolaise, limousine,...) ;
- origine géographique (pays, région,...) ;
- sexe (mâle entier, mâle castré femelle,...) ;
- date de naissance...

Les informations correspondant au mode d'élevage de l'animal sont principalement, à titre d'exemple, les suivantes :
- régime alimentaire ;
- type d'élevage pratiqué (stabulation, élevage en plein air...) ;
- conditions extérieures (éventuelle radioactivité...)...

Enfin, les informations relatives à l'abattage de l'animal sont principalement, à titre d'exemple, les suivantes :
- coordonnées d'abattage (identité de l'abattoir, lieu, date,...) ;
- classement de la carcasse ;
- durée et température de mûrissement en chambre froide;
- mode de découpe...

Si l'on considère un animal déterminé, le procédé se déroule en pratique de la manière suivante :

On munit l'animal, par exemple à son oreille, d'un support d'informations. Puis, au cours de la vie de l'animal, on y transmet périodiquement toutes les informations que l'on désire enregistrer. Dès la naissance, seront, par exemple, introduites, les informations relatives à l'origine de l'animal, c'est-à-dire à l'espèce, à la race, à l'origine géographique, au sexe, à la date de naissance. Puis, d'autres informations seront mémorisées au cours de sa vie, telles que, par exemple, le type d'élevage pratiqué, le régime alimentaire, la date de castration...

Bien entendu, il sera possible à tout moment, de retirer du support d'informations, des informations devenues dépassées, ou indésirables. Il sera également possible d'extraire certaines informations utiles pour certains utilisateurs, par exemple, lors de l'exportation de l'animal.

A son arrivée à l'abattoir, l'animal est donc porteur de toutes les informations relatives tant à son origine qu'à son mode d'élevage.

Une fois l'abattage effectué, on introduit au moyen d'un terminal de dialogue dans une machine informatique incluse dans le système informatique toutes les informations relatives à l'abattage, ainsi que les informations alors présentes dans le support d'informations. Cette machine informatique ou celle reliée à elle compare alors toutes ces informations introduites avec des données type qui ont été préalablement mémorisées. Chacune de ces données prémémorisées correspond à une information concernant l'historique de l'animal (espèce, race, origine géographique, sexe, âge, type d'élevage, régime alimentaire, durée et température de mûrissement, mode de découpe, etc...) et l'ensemble des informations concernant l'historique d'un animal correspond à un certain label de qualité standard, lui aussi prémémorisé. Ainsi, la machine informatique concernée pourra déterminer à quel label de qualité correspondent les informations introduites et définir ainsi pour la pièce de viande concernée, le label de qualité concerné.

A titre d'exemple, la détermination d'un label peut se faire de la manière suivante :

| Informations provenant du support d'informations | Informations provenant de l'abattage |
|---|---|
| - Espèce animale | - Date et lieu d'abattage |
| - Date de naissance | - Classement de la carcasse |
| - Race | - Durée et température du mûrissement |
| - Sexe | - Mode de découpe |
| - Origine géographique | |
| - Mode d'élevage | |
| - Régime alimentaire | |

De l'ensemble de ces informations, la machine informatique déduit les coordonnées exactes de l'animal (âge, terroir, etc...) et les compare avec des ensembles d'informations prémémorisées, chaque ensemble comportant toutes les informations relatives à l'origine, au mode d'élevage et à l'abattage de l'animal, et correspondant à un label de qualité déterminé.

L'invention a également pour objet un dispositif de gestion d'informations relatives à un label de qualité d'une pièce de viande d'un animal pour la mise en oeuvre du procédé selon l'invention.

Ce dispositif est principalement constitué par des supports d'informations, chaque animal étant pourvu d'un support, par un terminal de dialogue sous la forme d'un boîtier électronique, regroupant les fonctions de source d'énergie et de transmission bilatérale, codage, décodage et affichage des informations permettant de procéder à l'échange des informations avec le support d'informations ou avec une machine informatique présentant la fonction de lecteur.

Selon une première caractéristique de l'invention, chaque support d'informations comporte une partie électronique active sous la forme d'un micro-circuit constituée, d'une part, d'une partie mémoire, électriquement effaçable, chargée d'enregistrer les transactions,d'autre part, d'un microprocesseur chargé de gérer ladite mémoire, ainsi que d'authentifier les utilisateurs et de valider les transactions, et enfin d'une autre partie mémoire, non effaçable et contenant le programme du microprocesseur.

La partie mémoire électriquement effaçable sera avantageusement du type mémoire programmable à lecture seule électriquement effaçable (EEPROM) et la partie mémoire contenant le microprocesseur sera avantageusement du type mémoire à lecture seule (ROM).

Selon une seconde caractéristique de l'invention, la partie mémoire électriquement effaçable est divisée par le microprocesseur en quatre zones, à savoir une zone de lecture libre, contenant des informations de nature non confidentielle, une zone de contrôle des accès contenant l'enregistrement de tous les accès à la zone de transaction lorsqu'elle est protégée par un code confidentiel ainsi que la gestion des erreurs de codes et de mécanismes de blocage-déblocage des circuits du support d'informations, intervenant en cas d'utilisation abusive ou frauduleuse, une zone des transactions, qui enregistre toutes les opérations de saisie des données relatives aux évènements significatifs survenus au cours de l'élevage de l'animal et enfin, une zone secrète contenant les codes secrets des utilisateurs autorisés à effectuer des transactions, et les paramètres de chiffrage des clefs.

Les informations de nature non confidentielle contenues dans la zone de lecture libre seront, par exemple, les informations relatives à l'identité de l'animal, à son numéro matricule, etc...

Selon une autre caractéristique de l'invention, le support d'informations comporte un moyen permettant d'échanger des signaux avec le terminal de dialogue, par voie électrique ou électromagnétique, ainsi qu'un moyen permettant de capter l'énergie en provenance du terminal de dialogue, ces deux moyens pouvant utiliser totalement ou partiellement les mêmes organes.

Dans le cas de la transmission des signaux par la voie électromagnétique, cette transmission se fera avantageusement grâce aux ondes hertziennes pour les signaux, et par induction pour l'énergie, l'organe de transmission pouvant etre, dans les deux cas, sous la forme d'un circuit électrique jouant le rôle à la fois d'antenne et d'enroulement d'un transformateur sans fer, dont le primaire fait partie du terminal de dialogue et le secondaire appartient au support d'informations.

Le support pourra être, par exemple, sous la forme d'une pastille revêtue d'une couche de matière synthétique inaltérable et tolérable par l'animal, telle que du polyéthylène ou un élastomère aux silicones.

Cette matière synthétique pourra, dans le cas de la transmission d'énergie et de signaux par la voie électrique, laisser passer les électrodes grâce à un simple perçage, tout en assurant une parfaite étanchéité lorsque les électrodes sont en place, et lorsqu'elles ne le sont plus, par simple élasticité.

Dans tous les cas, les signaux sont transmis selon une procédure "série" ou "asynchrone", le message étant décomposé en des éléments transmissibles séparément, et à la suite l'un de l'autre, sur une ligne de transmission à canal unique. La décomposition en éléments est effectuée par le programme du microprocesseur. Par ailleurs, la mise en séquence ordonnée aux fins d'émission, ou réciproquement la réorganisation en message d'une séquence reçue, ainsi que la gestion de la transmission, sont avantageusement effectuées grâce à un composant électronique du type UART (Universal Asynchronious Receiver Transmetter, ou encore Emetteur Récepteur Universel Asynchrone).

Enfin, selon une caractéristique supplémentaire de l'invention, le support d'informations et le terminal de dialogue utilisent, pour communiquer entre-eux, par la voie électrique, la modulation d'une fréquence porteuse.

Cette utilisation est, en effet, indispensable pour communiquer tant par la voie électrique que par la voie électromagnétique.

Dans le cas de l'utilisation d'une porteuse, chacun des éléments qui communiquent, quels que soient le support d'informations et le terminal de dialogue, sont munis d'un modulateur démodulateur ("modem" ou encore ETTD - Equipement Terminal de Transmission de Données), dont la fonction est d'amplifier et de mettre en forme les signaux en provenance ou à destination de l'interface asynchrone (UART).

Le terminal de dialogue sera normalement sous la forme d'un boîtier étanche pouvant, par exemple, être porté en bandoulière. Il est muni d'un capteur électronique relié au boîtier, par l'intermédiaire d'un câble électrique. Ce capteur comporte les organes de fourniture d'énergie au support d'informations, ainsi que les organes d'échange des signaux avec ce dernier (grâce aux électrodes ou à l'antenne).

Le capteur est ainsi apte à remplir ses différentes fonctions, lorsqu'il est mis au contact du support d'informations. Pour le support d'informations tout comme pour le terminal de dialogue, on aura avantageusement recours à des semi-conducteurs à faible consommation mais suffisamment durcis pour un environnement agricole du fait des différents champs électriques y régnant (lignes de haute-tension, clôtures...). Par ailleurs, le rendement de la transmission d'énergie par induction doit rester à un niveau compatible avec un faible échauffement de l'enroulement ou du régulateur de tension. On pourra avoir intérêt à recourir à des circuits dits "hybrides".

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

Il est évident que l'invention peut également être mise en oeuvre dans d'autres domaines d'application.

## Revendications

1. Procédé de gestion d'informations relatives à un label de qualité d'une pièce de viande d'un animal, notamment sur son origine, son mode d'élevage et son abattage, consistant à pourvoir l'animal d'un support d'informations, à transmettre audit support toutes les informations relatives à son origine et son mode d'élevage à l'aide d'un dispositif électronique tel qu'un terminal de dialogue, à extraire ces informations à l'aide dudit terminal de dialogue, à authentifier les utilisateurs dudit terminal et valider les transactions par codes secrets, à introduire lesdites informations provenant du support ensemble avec toutes celles provenant de l'abattage de l'animal, dans une machine informatique qui déduit alors les coordonnées exactes de l'animal et les compare avec des données type préalablement mémorisées correspondant à des labels de qualité standards, de manière à établir, seule ou en liaison avec d'autres machines auxquelles elle pourrait être reliée, le label de qualité de la viande, sous la forme d'une étiquette destinée à accompagner la carcasse de l'animal.

2. Dispositif de gestion d'informations relatives à un label de qualité d'une pièce de viande d'un animal pour la mise en oeuvre du procédé selon la revendication 1, caractérisé en ce qu'il est principalement constitué par des supports d'informations, chaque animal étant pourvu d'un support, par un terminal de dialogue sous la forme d'un boîtier électronique regroupant les fonctions de source d'énergie et de transmission bilatérale, codage, décodage et affichage des informations permettant de procéder à l'échange des informations avec le support d'informations ou avec une machine informatique, ladite machine informatique comprenant des moyens de mémorisation de données-type, de comparaison de ces données-type prémémorisées avec les coordonnées exactes de l'animal déduites de la lecture dudit terminal de dialogue et d'établissement, à partir de ladite comparaison, dudit label de qualité.

3. Dispositif de gestion selon la revendication 2, caractérisé en ce que chaque support d'informations comporte une partie électronique active sous la forme d'un micro-circuit constituée d'une part d'une partie mémoire, électriquement effaçable, chargée d'enregistrer les transactions d'autre part d'un microprocesseur chargé de gérer ladite mémoire, ainsi que d'authentifier les utilisateurs et de valider les transactions et enfin d'une autre partie mémoire non effaçable et contenant le programme du microprocesseur. actions, et enfin d'une autre partie mémoire, non effaçable et contenant le programme du microprocesseur.

4. Dispositif de gestion selon la revendication 3, caractérisé en ce que la partie mémoire électriquement effaçable est du type mémoire programmable à lecture seule électriquement effaçable (EEPROM) et la partie mémoire contenant le microprocesseur est du type mémoire à lecture seule (ROM).

5. Dispositif de gestion, selon l'une quelconque des revendications 3 et 4, caractérisé en ce que la partie mémoire électriquement effaçable est divisée par le microprocesseur en quatre zones, à savoir une zone de lecture libre, contenant des informations de nature non confidentielle, une zone de contrôle des accès contenant l'enregistrement de tous les accès à la zone de transaction lorsqu'elle est protégée par un code confidentiel ainsi que la gestion des erreurs de codes et des mécanismes de blocage-déblocage des circuits du support d'informations intervenant en cas d'utilisation abusive ou frauduleuse, une zone des transactions, qui enregistre toutes les opérations de saisie des données relatives aux évènements significatifs survenus au cours de l'élevage de l'animal et enfin, une zone secrète contenant les codes secrets des utilisateurs autorisés à effectuer des transactions, et les paramètres de chiffrage des clefs.

6. Dispositif de gestion, selon l'une quelconque des revendications 2 à 5, caractérisé en ce que le support d'informations comporte un moyen permettant d'échanger des signaux avec le terminal de dialogue, par voie électrique ou électromagnétique, ainsi qu'un moyen permettant de capter l'énergie en provenance du terminal de dialogue, ces deux moyens pouvant utiliser totalement ou partiellement les mêmes organes.

7. Dispositif de gestion selon la revendication 6, caractérisé en ce que, dans le cas de la transmission des signaux par la voie électromagnétique, la transmission se fait avantageusement grâce aux ondes hertziennes pour les signaux, et par induction pour l'énergie, l'organe de transmission pouvant être, dans les deux cas, sous la forme d'un circuit électrique jouant le rôle, à la fois d'antenne et d'enroulement d'un transformateur sans fer, dont le primaire fait partie du terminal de dialogue et le secondaire appartient au support d'informations.

8. Dispositif de gestion, selon l'une quelconque des revendications 2 à 7, caractérisé en ce que chaque support d'informations est sous la forme d'une pastille revêtue d'une couche de matière synthétique inaltérable et tolérable par l'animal, telle que du polyéthylène ou un élastomère aux silicones.

9. Dispositif de gestion selon la revendication 8, caractérisé en ce que ladite couche de matière synthétique peut, dans le cas de la transmission d'énergie et de signaux par la voie électrique, laisser passer les électrodes grâce à un simple perçage, tout en assurant une parfaite étanchéité lorsque les électrodes sont en place, et lorsqu'elles ne le sont plus, par simple élasticité.

10. Dispositif de gestion, selon l'une quelconque des revendications 2 à 9, caractérisé en ce que le support d'informations et le terminal de dialogue utilisent, pour communiquer entre-eux, par la voie électrique ou par la voie électromagnétique, la modulation d'une fréquence porteuse.

## Claims

1. Process for the management of information concerning a label of quality of a piece of meat from an animal, in particular concerning its origin, the method of breeding it and its slaughter, involving providing the animal with an information carrier, transmitting to said carrier all the information concerning its origin and the method of breeding it by means of an electronic device such as an interactive terminal, extracting this information by means of said interactive terminal, authenticating the users of said terminal and validating the transactions by secret codes, introducing said information originating from the carrier together with all the information originating from the slaughter of the animal into a computer which deduces the exact co-ordinates of the animal and compares them with previously stored data corresponding to standard labels of quality so as to establish, alone or in combination with other machines to which it could be connected, the label of quality of the meat in the form of a tag intended to accompany the animal's carcass.

2. Device for the management of information concerning a label of quality of a piece of meat from an animal for carrying out the process according to claim 1, characterised in that it consists mainly of information carriers, each animal being provided with a carrier, of an interactive terminal in the form of an electronic casing containing the functions of power supply and bilateral transmission, coding, decoding and display of information allowing the exchange of information with the information carrier or with a computer, said computer comprising data storage means, means for comparing this prestored data with the exact co-ordinates of the animal deduced from the reading of said interactive terminal and for establishment, from said comparison, of said label of quality.

3. Management device according to claim 2, characterised in that each information carrier comprises an active electronic portion in the form of a microcircuit consisting, on the one hand, of an electrically erasable memory portion responsible for recording the transactions and, on the other hand, of a microprocessor responsible for managing said memory and for authenticating the users and validating the transactions and, finally, a further non-erasable memory portion containing the program of the microprocessor.

4. Management device according to claim 3, characterised in that the electrically erasable memory portion is of the electrically erasable programmable read-only memory type (EEPROM) and the memory portion containing the microprocessor is of the read-only memory type (ROM).

5. Management device according to one of claims 3 and 4, characterised in that the electrically erasable memory portion is divided by the microprocessor into four zones, that is a free read zone containing information of a non-confidential nature, an access control zone containing the recording of all the accesses to the transaction zone when protected by a confidential code as well as the management of code errors and mechanisms for the locking-unlocking of the circuits of the information carrier which intervene in the event of abusive or fraudulent use, a transaction zone which records all the data acquisition operations concerning significant events occurring during the breeding of the animal and, finally, a secret zone containing the secret codes of the users authorised to make transactions and the key coding parameters.

6. Management device according to any one of claims 2 to 5, characterised in that the information carrier comprises a means for exchanging signals with the interactive terminal by an electric or electromagnetic method as well as a means for picking up the power originating from the interactive terminal, these two means being able to use completely or partially the same equipment.

7. Management device according to claim 6, characterised in that, in the event of the transmission of signals by the electromagnetic method, transmission is advantageously carried out by means of electromagnetic waves with regard to the signals and by induction with regard to the power, the transmission equipment in both cases possibly being in the form of an electric circuit acting both as an aerial and as a winding of a transformer without iron of which the primary winding forms part of the interactive terminal and the secondary winding belongs to the information carrier.

8. Management device according to any one of claims 2 to 7, characterised in that each information carrier is in the form of a pad coated with a layer of weather-resistant synthetic material which may be tolerated by the animal such as polyethylene or a silicone elastomer.

9. Management device according to claim 8, characterised in that, in the case of the transmission of power and signals by the electrical method, said layer of synthetic material can allow passage of the electrodes by means of a simple perforation while ensuring a perfect seal when the electrodes are in position and when they are no longer in position by mere elasticity.

10. Management device according to any one of claims 2 to 9, characterised in that the information carrier and the interactive terminal employ carrier frequency modulation to intercommunicate by the electric method or by the electromagnetic method.

## Patentansprüche

1. Verfahren zur Verwaltung von Informationen bezüglich eines Gütezeichens mit Angabe der Eigenschaften eines Stückes Fleisch von einem Tier, insbesondere über seine Herkunft, seine Art der Aufzucht und seine Schlachtung, wobei das Tier mit einem Informationsträger versehen wird, wobei auf diesen Informationsträger mit Hilfe einer elektronischen Vorrichtung, beispielsweise mit einem Dialogterminal, alle Daten bezüglich seiner Herkunft und der Art seiner Aufzucht übertragen werden, wobei diese Informationen mit Hilfe des besagten Dialogterminals ausgelesen werden, wobei die Benutzer dieses Terminals bestätigt oder beglaubigt und die Übertragungen durch Geheimcode wirksam gemacht werden, wobei die besagten von dem Datenträger stammenden Informationen zusammen mit all denen von der Schlachtung des Tieres in einen Rechner oder Computer eingegeben werden, der danach die exakten persönlichen Daten des Tieres ermittelt und sie mit denjenigen vergleicht, die ihm zuvor gemäß Standard-Gütezeichen eingespeichert sind, um selbst oder in Verbindung mit anderen Rechnern oder Computern das Gütezeichen für das Fleisch in Form eines Etikettes zu erstellen, welches dazu vorgesehen ist, das geschlachtete Tier zu begleiten.

2. Vorrichtung zur Verwaltung von Informationen bezüglich eines Gütezeichens eines Stückes Fleisch von einem Tier zur Durchführung des Verfahrens nach Anspruch 1, dadurch gekennzeichnet, daß sie im wesentlichen aus Informationsträgern, von denen jeweils einer für ein Tier vorgesehen ist, und aus einem Dialogterminal in Form eines Elektronikgehäuses besteht, welches die Funktionen der Energiequelle und der beidseitigen Übertragung, Codierung und Decodierung und Bekanntgabe von Informationen zusammenfaßt und den Informationsaustausch mit dem Informationsträger oder einem Rechner oder einer Informationsmaschine ermöglicht, wobei besagter Rechner die Mittel zur Speicherung von Daten, zum Vergleich dieser zuvor gespeicherten Daten mit den exakten persönlichen Daten des Tieres, abgeleitet durch das Lesen des besagten Dialogterminals, und zum Erstellen des besagten Gütezeichens ab Beginn dieses Vergleiches aufweist.

3. Vorrichtung zur Verwaltung nach Anspruch 2, dadurch gekennzeichnet, daß jeder Informationsträger einen aktiven elektronischen Teil in Form einer Mikroschaltung enthält, die einerseits aus einem elektrisch löschbaren Speicherteil zum Aufzeichnen der Übertragungen, andererseits aus einem Mikroprozessor zur Verwaltung besagter Speicherung ebenso wie zur Bestätigung oder Beglaubigung der Benutzer und zur Freigabe der Übertragungen und schließlich aus einem nicht löschbaren Speicherteil mit dem Programm des Mikroprozessors besteht.

4. Vorrichtung zur Verwaltung nach Anspruch 3, dadurch gekennzeichnet, daß der elektrisch löschbare Speicherteil ein elektrisch löschbarer und wieder programmierbarer Festwertspeicher (EEPROM) und der Speicherteil mit dem Mikroprozessor ein nur-Lese-Speicher (ROM) ist.

5. Vorrichtung zur Verwaltung nach Anspruch 3 oder 4, dadurch gekennzeichnet, daß der elektrisch löschbare Speicherteil durch den Mikroprozessor in vier Zonen unterteilt ist, das heißt, eine Zone der freien Lesung, welche Informationen nicht vertraulicher Art enthält, eine Zone für die Kontrolle der Zugriffe, welche die Aufzeichnungen aller Zugriffe in die Transaktionszone enthält, während diese durch einen vertraulichen Code geschützt ist, sowie die Verwaltung der Fehler von Codes und Mechanismen der Blockierung - Deblockierung (Freigabe) von Schaltungen des Informationsträgers, der im Falle einer mißbräuchlichen oder betrügerischen Nutzung interveniert, und eine Zone der Transaktionen, welche alle Vorgänge der Datenerfassung registriert, die sich auf bedeutende Ereignisse während der Aufzucht des Tieres beziehen und schließlich eine Geheimzone, welche die geheimen Codes der Benutzer enthält, die zur Durchführung der Transaktionen ermächtigt sind, sowie die Parameter für die Chiffrierung von Schlüsseln.

6. Vorrichtung zur Verwaltung nach einem der Ansprüche 2 bis 5, dadurch gekennzeichnet, daß der Informationsträger ein Mittel enthält, wodurch es möglich ist, Signale mit dem Dialogterminal auf elektrischem oder elektromagnetischem Wege auszutauschen, sowie ein Mittel, welches es gestattet, Energie aus dem Dialogterminal aufzunehmen, wobei diese beiden Mittel vollständig oder teilweise die gleichen Organe nutzen können.

7. Vorrichtung zur Verwaltung nach Anspruch 6, dadurch gekennzeichnet, daß im Falle der Signalübertragung auf elektromagnetischem Wege, wobei die Übertragung vorteilhafterweise dank der Hertz-Wellen für die Signale und durch Induktion für die Energie erfolgt, das Übertragungsorgan in beiden Fällen eine elektrische Schaltung ist, die einmal als Antenne und einmal als eisenfreie Wicklung eines Transformators wirkt, dessen Primärseite Teil des Dialogterminals ist und dessen Sekundärseite zu dem Informationsträger gehört.

8. Vorrichtung zur Verwaltung nach einem der Ansprüche 2 bis 7, dadurch gekennzeichnet, daß jeder Informationsträger die Form einer Tablette hat, die mit einem unveränderbaren Kunststoff beschichtet ist, der für das Tier verträglich ist, wie beispielsweise Polyethylen oder ein Elastomer auf Silikonbasis.

9. Vorrichtung zur Verwaltung nach Anspruch 8, dadurch gekennzeichnet, daß die besagte Kunststoffbeschichtung im Falle einer Übertragung von Energie und von Signalen auf elektrischem Wege die Elektroden dank einer einfachen Ausnehmung oder Bohrung passieren läßt, wobei eine völlige Dichtigkeit gegeben ist, solange die Elektroden sich an ihrem Platz befinden, und durch einfache Elastizität, wenn diese nicht mehr vorhanden sind.

10. Vorrichtung zur Verwaltung nach einem der Ansprüche 2 bis 9, dadurch gekennzeichnet, daß der Informationsträger und das Dialogterminal für die Kommunikation untereinander auf elektrisch oder elektromagnetischem Wege die Modulation einer Steuer- oder Trägerfrequenz verwenden.
